# EUROPÄISCHE PATENTANMELDUNG

(11) **EP 4 672 288 A1**
(43) Veröffentlichungstag der Anmeldung: **31.12.2025**
(21) Anmeldenummer: 24185419.9
(22) Anmeldetag: 28.06.2024
(51) Int. Cl.: H01G 11/82, H01M 10/04, H01M 50/169, H01M 50/171, H01M 50/172, H01M 50/184, H01M 50/186, H01M 50/193, H01M 50/474, H01M 50/489, H01M 50/533, H01M 50/534, H01M 50/536, H01M 50/547, H01M 50/566

(54) **ELEKTROCHEMISCHES ENERGIESPEICHERELEMENT UND HERSTELLUNGSVERFAHREN**

(71) Anmelder: VARTA Microbattery GmbH, 73479 Ellwangen Jagst (DE)
(72) Erfinder: Fischer, Claus-Christian, 73479 Ellwangen (DE); Kilibarda, Goran, 73527 Schwäbisch Gmünd (DE); Meyer, Franziska, 73433 Aalen Wasseralfingen (DE)
(74) Vertreter: Ostertag & Partner Patentanwälte mbB

(57) **Zusammenfassung**

Ein elektrochemisches Energiespeicherelement 100 umfasst ein einen Innenraum 103 umschließendes Gehäuse mit einem Gehäuseboden 104 und einem Gehäusedeckel 102, die jeweils eine in den Innenraum 103 weisende Innenseite und eine Außenseite aufweisen, und einem einwandigen Gehäusemantel 105. In dem Innenraum 103 angeordnet sind mindestens eine positive und mindestens eine negative Elektrode, die über einen Elektrolyten miteinander verbunden sind. Der Gehäuseboden 104 oder der Gehäusedeckel 102 weisen ein Loch 107 auf. Auf der Innenseite des Gehäusebodens 104 oder des Gehäusedeckels mit dem Loch 107 ist eine Isolierschicht 108 um das Loch 107 herum angeordnet. Ein Metallplättchen 109, das an dieser Innenseite, nur getrennt durch die Isolierschicht 108, anliegt, bildet einen Lochboden, der das Loch 107 auf der Innenseite verschließt. Ein Stromleiter 110, der mit einer der Elektroden elektrisch verbunden ist, ist an die dem Loch 107 abgewandte Seite des Metallplättchens 109 angebunden. Neben dem Energiespeicherelement 100 werden auch Verfahren zu seiner Herstellung beschrieben.

## Beschreibung

Die vorliegende Erfindung betrifft ein elektrochemisches Energiespeicherelement sowie Verfahren zur Herstellung von elektrochemischen Energiespeicherelementen.

### ANWENDUNGSGEBIET UND STAND DER TECHNIK

Elektrochemische Energiespeicherelemente sind dazu in der Lage, gespeicherte chemische Energie durch eine Redoxreaktion in elektrische Energie umzuwandeln. Das einfachste elektrochemische Energiespeicherelement ist die elektrochemische Zelle mit einer positiven und einer negativen Elektrode. Bei einer Entladung werden an der negativen Elektrode durch einen Oxidationsprozess Elektronen freigesetzt. Hieraus resultiert ein Elektronenstrom, der von einem externen elektrischen Verbraucher abgegriffen werden kann. Zugleich kommt es zu einem der Elektrodenreaktion entsprechenden lonenstrom innerhalb der Zelle. Dieser lonenstrom wird durch einen ionenleitenden Elektrolyten ermöglicht.

Wenn die Entladung reversibel ist, also die Möglichkeit besteht, die bei der Entladung erfolgte Umwandlung von chemischer Energie in elektrische Energie wieder umzukehren und damit die Zelle wieder zu laden, spricht man von einer sekundären Zelle. Die bei sekundären Zellen allgemein übliche Bezeichnung der negativen Elektrode als Anode und die Bezeichnung der positiven Elektrode als Kathode bezieht sich auf die Entladefunktion der elektrochemischen Zelle.

Für viele Anwendungen werden heute Lithium-Ionen-Zellen eingesetzt, da diese Zellen hohe Ströme bereitstellen können und sich durch eine vergleichsweise hohe Energiedichte auszeichnen. Sie basieren auf dem Einsatz von Lithium, welches in Form von Ionen zwischen den Elektroden der Zelle hin und her wandern kann.

Die negativen und positiven Elektroden von Energiespeicherelementen werden häufig zu einem Verbundkörper kombiniert. Beispielsweise können bandförmige Elektroden aufgewickelt werden, so dass als Verbundkörper in Wickel gebildet wird, welcher die Elektroden spiralförmig gewickelt umfasst. In anderen Ausführungsformen werden Elektroden gestapelt. Zwischen positiven und negativen Elektroden werden dabei Separatoren oder Festelektrolytschichten angeordnet. In der Regel umfassen die Verbundkörper daher die Sequenz positive Elektrode / Separator oder Festelektrolyt / negative Elektrode.

Energiespeicherelemente weisen oftmals eine zylindrische Bauform auf. Hierbei werden einerseits Rundzellen und andererseits Knopfzellen voneinander unterschieden. Rundzellen zeichnen sich neben ihrer zylindrischen Form dadurch aus, dass ihre Höhe größer als ihr Durchmesser ist. Knopfzellen hingegen weisen eine Höhe auf, die kleiner als ihr Durchmesser ist. Darüber hinaus sind Rundzellen typischerweise größer dimensioniert als Knopfzellen. Die Nennkapazität einer Knopfzelle hat typischerweise einen Wert < 1500 mAh. Rundzellen können in Ausführungsformen als Lithium-Ionen-Zellen Kapazitäten von beispielsweise 90.000 mAh erreichen.

Knopfzellen werden zum Teil in sehr kleinen Bauformen angeboten. Sie eignen sich beispielsweise zur Versorgung von kleinen elektronischen Geräten wie Uhren, Hörgeräten, kabellosen Kopfhörern oder Ähnlichem.

Knopfzellen weisen klassisch ein Gehäuse aus zwei becherförmigen Gehäuseteilen auf, von denen eines mit seiner Öffnung voran in das andere eingeschoben ist. Ein Kunststoffring zwischen den beiden Gehäuseteilen dient als Dichtungselement und sorgt gleichzeitig dafür, dass die beiden Gehäuseteile elektrisch voneinander getrennt sind. Die beiden Gehäuseteile können daher als elektrische Pole dienen. Derartige Zellen sind beispielsweise aus der US 2013/0216881 A1 bekannt.

Das Gehäuse derartiger Knopfzellen weist einen mehrlagigen Mantelbereich auf, in dem der Zellenbecher, die Dichtung und der Zellendeckel überlappen. Bei vorgegebenen Außendimensionen geht dies zwingend mit einer Beschränkung des für die Elektroden der Zelle zur Verfügung stehenden Innenvolumens einher.

Weiterhin sind Knopfzellen bekannt, bei denen ein mit einer der Elektroden verbundener Pol durch eine Wands eines Gehäuses geführt ist. Beispielsweise beschreiben die EP 3813171 A1 und die CN 106159350 A Knopfzellen, bei denen ein Gehäuse aus einem Gehäusebecher und einem Gehäusedeckel gebildet ist, wobei der Gehäusedeckel die Öffnung des Gehäusebechers verschließt. Da beide Gehäuseteile die gleiche Polarität aufweisen, bedarf es einer Poldurchführung, um beide Elektroden in dem Gehäuse kontaktieren zu können. Diese führt in beiden Fällen durch den Gehäusedeckel, wobei die beschriebenen Lösungen jeweils eine radiale Abfolge von Pol, Dichtung und Gehäuse erfordern, was die Konstruktion der Zelle verkompliziert.

Aus der EP 3920297 A1 ist eine Knopfzelle bekannt, bei der ein Stromleiter durch ein Loch im Deckel eines Metallgehäuses geführt und mit einer auf der Deckelaußenseite angeordneten Metallscheibe verschweißt ist. Die Metallscheibe verschließt dabei das Loch. Ein unmittelbarer Kontakt des Stromleiters mit dem Rand des Loches muss allerdings unbedingt vermieden werden.

### AUFGABE UND LÖSUNG

Demgegenüber stellt sich die Erfindung die Aufgabe, ein Energiespeicherelement und insbesondere eine Knopfzelle mit einer einfachen Bauart und einer besonders hohen Energiedichte bereitzustellen.

Diese Aufgabe wird durch ein elektrochemisches Energiespeicherelement mit den Merkmalen des Anspruchs 1 gelöst. Vorteilhafte Ausgestaltungen des Energiespeicherelements ergeben sich aus den von Anspruch 1 abhängigen Ansprüchen. Weiterhin wird diese Aufgabe durch die Verfahren zur Herstellung eines Energiespeicherelements gemäß den Ansprüchen 10 und 11 gelöst.

Das erfindungsgemäße elektrochemische Energiespeicherelement ist bevorzugt als Knopfzelle ausgebildet, weist also eine zylindrische Bauform auf mit einer Höhe, die kleiner als ihr Durchmesser ist. In der Regel beträgt ihr maximaler Durchmesser bis zu 3 cm, bevorzugt weniger als 2 cm.

In anderen bevorzugten Ausführungsformen kann das erfindungsgemäße elektrochemische Energiespeicherelement eine zylindrische Bauform aufweisen mit einer Höhe, die größer als ihr Durchmesser ist. Ein solches Energiespeicherelement kann beispielsweise einen Durchmesser von bis zu 2 cm und eine Höhe von bis zu 3 cm aufweisen.

Erfindungsgemäße elektrochemische Energiespeicherelemente mit zylindrischer Bauform und den genannten Dimensionen sind besonders bevorzugt, wenn sie eine Nennkapazität von bis zu 1500 mAh aufweisen. Beispielsweise kann die Nennkapazität im Bereich von 100 mAh bis 1000 mAh liegen.

Alle Energiespeicherelemente mit zylindrischer Bauform und einer Nennkapazität ≤ 1500 mAh werden im Rahmen der vorliegenden Anmeldung als Miniaturzellen bezeichnet.

In weiteren Ausführungsformen kann das erfindungsgemäße elektrochemische Energiespeicherelement eine zylindrische Bauform aufweisen mit einer Höhe, die größer als ihr Durchmesser ist, und mit einer Kapazität > 1500 mAh. Solche Energiespeicherelemente werden vorliegend als Rundzellen bezeichnet. Mit einem Formfaktor von 21 × 70 (21 mm Durchmesser bei 70 mm Höhe) kann eine solche Zelle in einer Ausführungsform als Lithium-Ionen-Zelle beispielsweise eine bevorzugte Nennkapazität im Bereich von 3000 mAh bis 7000 mAh aufweisen.

Es kann aber durchaus auch bevorzugt sein, dass das Energiespeicherelement eine andere Bauform aufweist, beispielsweise ein prismatisch ausgebildetes Gehäuse hat.

Das erfindungsgemäße elektrochemische Energiespeicherelement zeichnet sich durch die folgenden Merkmale a. bis f. aus:
a. Es umfasst ein einen Innenraum umschließendes Gehäuse
   - mit einem Gehäuseboden, der eine in den Innenraum weisende Innenseite und eine Außenseite aufweist,
   - einem Gehäusedeckel, der eine in den Innenraum weisende Innenseite und eine Außenseite aufweist, und
   - einem einwandigen Gehäusemantel.
b. In dem Innenraum angeordnet sind mindestens eine positive und mindestens eine negative Elektrode, die über einen Elektrolyten miteinander verbunden sind.
c. Der Gehäuseboden oder der Gehäusedeckel weist ein Loch auf.
d. Auf der Innenseite des Gehäusebodens oder des Gehäusedeckels mit dem Loch ist eine Isolierschicht um das Loch herum angeordnet.
e. Ein Metallplättchen, liegt an dieser Innenseite, nur getrennt von ihr durch die Isolierschicht, an und bildet einen Lochboden, der das Loch auf der Innenseite verschließt.
f. Ein Stromleiter, der mit einer der Elektroden elektrisch verbunden ist, ist an die dem Loch abgewandte Seite des Metallplättchens angebunden.

Gegenüber den aus dem Stand der Technik bekannten Lösungen zeichnet sich das erfindungsgemäße elektrochemische Energiespeicherelement dadurch aus, dass der einwandige Gehäusemantel Vorteile hinsichtlich der gewünschten hohen Energiedichte bietet. Die erwähnte radiale Abfolge von Pol, Dichtung und Gehäuse ist bei der erfindungsgemäßen Lösung nicht erforderlich, die beanspruchte Zelle weist einen sehr einfachen Aufbau auf und ihre Montage gestaltet sich entsprechend sehr einfach. Eine Kurzschlussproblematik wie bei der EP 3920297 A1 existiert nicht.

Das Gehäuse ist bevorzugt ein zylindrisches Gehäuse. Der Gehäuseboden und der Gehäusedeckel sind bevorzugt kreisförmig oder oval ausgebildet.

Bevorzugt sind der Gehäuseboden und der Gehäusedeckel parallel zueinander ausgerichtet. Sowohl der Gehäuseboden als auch der Gehäusedeckel schließen mit dem Gehäusemantel bevorzugt einen Winkel von 90° ein.

In Übereinstimmung mit den obigen Ausführungen weisen der Gehäuseboden und der Gehäusedeckel besonders bevorzugt einen minimalen Durchmesser im Bereich von 0,5 cm bis 1 cm und einen maximalen Durchmesser im Bereich von 2 cm bis 3 cm auf.

Der Gehäusemantel weist besonders bevorzugt eine Höhe im Bereich von 0,3 cm bis 3 cm auf.

Hinsichtlich des Gehäuses zeichnet sich das Energiespeicherelement bevorzugt durch mindestens eines der unmittelbar folgenden zusätzlichen Merkmale a. bis e. aus:
a. Das Gehäuse umfasst einen Gehäusebecher mit dem Gehäuseboden und dem Gehäusemantel.
b. Der Gehäusedeckel ist eine Scheibe.
c. Der Gehäusedeckel verschließt eine endständige Öffnung des Gehäusebechers.
d. Der Gehäusedeckel ist in die Öffnung eingeschweißt, gelötet oder geklebt.
e. Der Gehäusedeckel ist auf den Rand der Öffnung eingeschweißt, gelötet oder geklebt.

Besonders bevorzugt sind die unmittelbar vorstehenden Merkmale a. bis d. oder die unmittelbar vorstehenden Merkmale a. bis c. und e. in Kombination realisiert.

Der Gehäusebecher und der Gehäusedeckel weisen bevorzugt die gleiche Polarität auf, insbesondere im Falle einer Schweißverbindung zwischen den beiden Gehäuseteilen.

Das Gehäusebecher und der Gehäusedeckel sind bevorzugt über eine Schweißlinie entlang dem Öffnungsrand des Gehäusebechers miteinander verbunden.

Besonders bevorzugt ist das Loch im Gehäuseboden des Gehäusebechers.

Der Boden des Gehäusebechers weist bevorzugt eine Dicke im Bereich von 50 µm bis 1000 µm, besonders bevorzugt eine Dicke im Bereich von 50 µm bis 500 µm, auf. Wenn das Loch im Gehäuseboden ist, so definiert dessen Dicke die Tiefe des Lochs.

Der Gehäusedeckel weist bevorzugt eine Dicke im Bereich von 50 µm bis 1000 µm, besonders bevorzugt eine Dicke im Bereich von 50 µm bis 500 µm, auf.

Der Gehäusemantel weist bevorzugt eine Dicke im Bereich von 50 µm bis 1000 µm, besonders bevorzugt eine Dicke im Bereich von 50 µm bis 500 µm, auf.

Bevorzugt wird der Gehäusebecher durch ein Tiefziehverfahren gebildet.

Der Gehäusebecher und der Gehäusedeckel können beispielsweise aus Nickel, Stahl oder Aluminium bestehen. Auch mehrlagige Bleche, beispielsweise mit einer Lage Stahl und einer Lage Nickel, können zur Herstellung der Gehäuseteile dienen.

Wie oben bereits erwähnt, kann das Gehäuse beispielsweise auch prismatisch ausgebildet sein. Der Gehäuseboden und der Gehäusedeckel können dann beispielsweise rechteckig sein oder eine alternative polygonale Grundform (beispielsweise Sechseck oder Achteck) aufweisen. Der Gehäusemantel kann im Fall eines Achtecks dann beispielsweise acht über Kanten verbundenen Seitenwände umfassen.

Hinsichtlich der Elektroden zeichnet sich das Energiespeicherelement bevorzugt durch eines der unmittelbar folgenden zusätzlichen Merkmale a. und b. aus:
a. Die mindestens eine positive und die mindestens eine negative Elektrode sind als zylindrischer Elektrode-Separator-Wickel ausgebildet.
b. Die mindestens eine positive und die mindestens eine negative Elektrode sind als Stapel ausgebildet.

Auch im Hinblick auf die Elektrochemie ist das Energiespeicherelement nicht beschränkt. In besonders bevorzugten Ausgestaltungen umfasst das Energiespeicherelement Elektroden auf Lithium-Ionen-Basis. In weiteren Ausführungsformen kann es sich bei dem Energiespeicherelement auch um eine Natrium-Ionen-Zelle oder eine Kalium-Ionen-Zelle, eine Calzium-Ionen-Zelle, eine Magnesium-Ionen-Zelle oder eine Aluminium-Ionen-Zelle handeln.

Besonders bevorzugt ist das elektrochemische Energiespeicherelement gemäß der Erfindung somit eine Lithium-Ionen-Zelle oder eine Natrium-Ionen-Zelle.

Bevorzugt umfasst das erfindungsgemäße Energiespeicherelement als negative und positive Elektrode sogenannten Kompositelektroden, die neben elektrochemisch aktiven Komponenten auch elektrochemisch inaktive Komponenten umfassen.

Als elektrochemisch aktive Komponenten (Aktivmaterialien) beispielsweise für Lithium-Ionen-Energiespeicherelemente kommen prinzipiell sämtliche Materialien in Frage, die Lithium-Ionen aufnehmen und wieder abgeben können. Für die negative Elektrode werden beispielsweise Partikel auf Kohlenstoffbasis oder auf Siliziumbasis wie beispielsweise graphitischer Kohlenstoff, eingesetzt. Als Aktivmaterialien für die positive Elektrode können beispielsweise, NMC-Materialien (LiNiₓMnₓCoₓ), Lithiumcobaltoxid (LiCoO₂), Lithiummanganoxid (LiMn₂O₄), Lithiumeisenphosphat (LiFePO₄) oder Derivate hiervon eingesetzt werden. Die elektrochemisch aktiven Materialien sind in der Regel in Partikelform in den Elektroden enthalten.

Die Aktivmaterialien sind in der Regel Bestandteil einer Mixtur, die als Schicht auf einem bandförmige Stromkollektor aufgebracht ist. Der Stromkollektor stellt dabei eine elektrochemisch inaktive Komponente des Energiespeicherelements dar. Als Stromkollektoren sind insbesondere metallische Folien geeignet, die als Träger für das jeweilige Aktivmaterial dienen. Bei Energiespeicherelementen auf Lithium-Ionen-Basis kann der Stromkollektor für die negative Elektrode (Anodenstromkollektor) beispielsweise aus Kupfer oder Nickel und der Stromkollektor für die positive Elektrode (Kathodenstromkollektor) beispielsweise aus Aluminium gebildet sein. Die Schicht umfasst als elektrochemisch inaktive Komponenten bevorzugt einen Elektrodenbinder (z. B. Polyvinylidenfluorid (PVDF) oder ein anderes Polymer, beispielsweise Carboxymethylzellulose), leitfähigkeitsverbessernde Additive und andere Zusätze. Der Elektrodenbinder gewährleistet die mechanische Stabilität der Elektroden und sorgt auch für die Haftung des Aktivmaterials auf den Stromkollektoren.

Als Elektrolyten für ein Energiespeicherelement auf Lithium-Ionen-Basis eignen sich beispielsweise Lösungen von Lithiumsalzen wie Lithiumhexafluorophosphat (LiPF₆) in organischen Lösungsmitteln (z. B. Ether und Ester der Kohlensäure).

In dem Wickel und dem Stapel sind die mindestens eine positive und die mindestens eine negative Elektrode bevorzugt durch einen Separator oder eine Schicht aus einem Festelektrolyten voneinander getrennt. Bei dem Separator handelt es sich in einfachen Fällen beispielsweise um eine mikroporöse Kunststofffolie.

Hinsichtlich des Lochs zeichnet sich das Energiespeicherelement bevorzugt durch mindestens eines der unmittelbar folgenden zusätzlichen Merkmale a. bis c. aus:
a. Das Loch liegt im Zentrum des Gehäusebodens oder des Gehäusedeckels.
b. Das Loch ist bevorzugt kreisförmig oder polygonal ausgebildet.
c. Das Loch weist einen minimalen Durchmesser im Bereich von 1 mm bis 1 cm und einen maximalen Durchmesser im Bereich von 2 cm bis 3 cm auf.

Besonders bevorzugt sind die unmittelbar vorstehenden Merkmale a. bis c. in Kombination realisiert.

Das Loch kann beispielsweise durch einen Stanzvorgang gebildet werden.

Hinsichtlich der Isolierschicht zeichnet sich das Energiespeicherelement bevorzugt durch mindestens eines der unmittelbar folgenden zusätzlichen Merkmale a. bis f. aus:
a. Die Isolierschicht ist mit der Innenseite des Gehäusebodens oder des Gehäusedeckels mit dem Loch über einen Klebstoff verbunden
b. Bei der Isolierschicht handelt es sich um eine Schicht aus einem Klebstoff, insbesondere einem Schmelzklebstoff.
c. Die Isolierschicht besteht oder basiert auf einem Polyolefin.
d. Die Isolierschicht besteht aus einem Material, das bei einer Temperatur im Bereich von 100 °C bis 180 °C schmilzt.
e. Die Isolierschicht weist eine Dicke im Bereich von 10 µm bis 500 µm auf.
f. Die Isolierschicht ist als O-Ring ausgebildet.

Besonders bevorzugt sind die unmittelbar vorstehenden Merkmale b. bis e., insbesondere die unmittelbar vorstehenden Merkmale b. bis f., in Kombination realisiert.

Bei der Isolierschicht kann es sich um ein Bauteil, beispielsweise einen O-Ring aus einem thermoplastischen Polymer, insbesondere einem Polyolefin, handeln, dessen eine Seite mittels eines Klebstoffs an die Innenseite des Gehäusebodens oder des Gehäusedeckels und dessen andere Seite mittels eines Klebstoffs an das Metallplättchen geklebt ist. Bevorzugt ist die Isolierschicht aber selbst eine Schicht aus einem Klebstoff, gemäß dem vorstehenden Merkmal b..

Bevorzugt weist die Isolierschicht eine gleichmäßige Dicke innerhalb des genannten bevorzugten Dickenbereichs auf.

Besonders bevorzugt wird zur Herstellung der Isolierschicht eine Folie aus einem schmelzbaren Poylmermaterial, erhitzt, insbesondere aufgeschmolzen. Besonders geeignet ist hierfür eine Folie aus einem haftungsmodifizierten Polyolefin.

Die Folie wird aufgeschmolzen und beim Erstarren entsteht eine klebende Verbindung zwischen der Innenseite des Gehäusebodens oder des Gehäusedeckels und dem Metallplättchen. Bevorzugt werden die zu verbindenden Flächen dabei aneinander gepresst.

Um die Haftung der Folie an der Innenseite und/oder dem Metallplättchen zu verbessern, können Rillen, Hinterschneidungen oder ähnliches vorgesehen sein. Insbesondere können die relevanten Oberflächen auch gezielt aufgeraut werden.

Hinsichtlich des Metallplättchens zeichnet sich das Energiespeicherelement bevorzugt durch mindestens eines der unmittelbar folgenden zusätzlichen Merkmale a. bis c. aus:
a. Das Metallplättchen weist einen minimalen Durchmesser im Bereich von 2 mm bis 1 cm und einen maximalen Durchmesser im Bereich von 2 cm bis 5 cm auf.
b. Das Metallplättchen weist eine Dicke im Bereich von 50 µm bis 500 µm auf.
c. Das Metallplättchen besteht aus einem der folgenden Materialien: Stahl, Edelstahl, Aluminium, Edelstahl beschichtet mit Aluminium, Edelstahl beschichtet mit Aluminium und Nickel, Nickel und Kupfer.

Besonders bevorzugt sind die unmittelbar vorstehenden Merkmale a. bis c. in Kombination realisiert.

Bevorzugt weist das Metallplättchen eine gleichmäßige Dicke innerhalb des genannten bevorzugten Dickenbereichs auf. Es kann sehr dünn ausgebildet sein, weshalb die Erfindung Gehäuse mit optimiertem Innenvolumen bereitstellen kann. Dieses größere Innenvolumen kann für mehr elektrochemisch aktives Material genutzt werden.

In besonders bevorzugten Ausführungsformen weist das Metallplättchen auf seiner dem Loch abgewandten Seite eine korrosionsvorbeugende, elektrisch leitende Schicht auf. Bei dieser kann es sich beispielsweise um eine Aluminium- oder eine Kupferschicht handeln. Im Fall einer Lithium-Ionen-Zelle ist Aluminium besonders bevorzugt, wenn das Metallplättchen elektrisch mit einer positiven Elektrode verbunden ist. Kupfer oder Nickel sind besonders bevorzugt, wenn das Metallplättchen elektrisch mit einer negativen Elektrode verbunden ist.

Die korrosionsvorbeugende Schicht kann beispielsweise galvanisch gebildet werden oder durch Sputtern oder ein übliches Verfahren zur Abscheidung von Metallen aus der Gasphase.

Hinsichtlich des Stromleiters zeichnet sich das Energiespeicherelement bevorzugt durch mindestens eines der unmittelbar folgenden zusätzlichen Merkmale a. bis d. aus:
a. Bei dem Stromleiter handelt es sich um eine Metallfolie.
b. Die Metallfolie hat eine Dicke im Bereich von 5 µm bis 100 µm.
c. Der Stromleiter besteht aus einem der folgenden Materialien: Kupfer, Nickel und Aluminium
d. Der Stromleiter ist an das Metallplättchen geschweißt.

Besonders bevorzugt sind die unmittelbar vorstehenden Merkmale a. bis d. in Kombination realisiert.

Bei dem Stromleiter kann es sich beispielsweise um einen Metallstreifen handeln, dessen eines Ende an den Stromkollektor einer der Elektroden geschweißt ist. Grundsätzlich ist es auch möglich, dass es sich bei dem Stromleiter um ein Endstück eines Stromkollektors handelt, der durch entsprechende Faltung bis zu dem Metallplättchen geführt wurde.

Natürlich kann zwischen dem Stromleiter und dem Metallplättchen an Stelle der Schweißverbindung (oder zusätzlich zu dieser) beispielsweise auch eine Klebeverbindung oder eine Lötverbindung bestehen.

In einigen besonders bevorzugten Ausführungsformen zeichnet sich das Energiespeicherelement durch das unmittelbar folgende zusätzliche Merkmal a. aus:
a. Es umfasst einen weiteren Stromleiter, der eine der Elektroden und das Gehäuse elektrisch miteinander verbindet.

Auch bei diesem weiteren Stromleiter kann es sich um einen Metallstreifen handeln, dessen eines Ende an den Stromkollektor einer der Elektroden geschweißt ist, gegebenenfalls um das Endstück eines Stromkollektors.

In einer bevorzugten Ausführungsform ist die mindestens eine positive Elektrode über den Stromleiter elektrisch mit dem Metallplättchen verbunden. In diesen Fällen bestehen der Stromkollektor der mindestens einen positiven Elektrode, der Stromleiter und das Metallplättchen oder die korrosionsvorbeugende, elektrisch leitende Schicht bevorzugt aus Aluminium. Die mindestens eine negative Elektrode ist dann vorzugsweise über den weiteren Stromleiter elektrisch mit dem Gehäuse, insbesondere dem Gehäusebecher oder dem Gehäusedeckel, verbunden. Wenn die mindestens eine negative Elektrode über den Stromleiter elektrisch mit dem Metallplättchen verbunden ist, dann ist vorzugsweise die mindestens eine positive Elektrode über den weiteren Stromleiter elektrisch mit dem Gehäuse, insbesondere dem Gehäusebecher oder dem Gehäusedeckel, verbunden.

In weiteren besonders bevorzugten Ausführungsformen zeichnet sich das Energiespeicherelement durch mindestens eines der unmittelbar folgenden zusätzlichen Merkmale a. bis c. aus:
a. In dem Loch ist ein metallischer Pol angeordnet, der auf dem Metallplättchen aufsitzt und von dem Rand des Lochs beabstandet ist.
b. Bei dem metallischen Pol handelt es sich um eine Metallscheibe, insbesondere mit einem Durchmesser im Bereich von 1 mm bis 3 cm und/oder einer Dicke im Bereich von 50 µm bis 1000 µm.
c. Der metallische Pol ist mit dem Metallplättchen verschweißt.

Der metallische Pol als Metallscheibe ist jedoch für die Erfindung nicht zwingend notwendig, auch ohne diese Metallscheibe kann der Strom über das darunter liegende Metallplättchen abgegriffen werden.

Besonders bevorzugt sind die unmittelbar vorstehenden Merkmale a. bis c. in Kombination realisiert.

Grundsätzlich kann das Metallplättchen als Pol dienen, eine Spannung kann am Boden des Lochs abgegriffen werden. In anderen Ausführungsformen kann es bevorzugt sein, die Metallscheibe in dem Loch anzuordnen und mit dem Metallplättchen zu verschweißen.

Die Erfindung umfasst weiterhin ein Verfahren zur Herstellung des beschriebenen elektrochemischen Energiespeicherelements. Dieses Verfahren umfasst zumindest die folgenden Schritte a. bis e.:
a. Bereitstellen eines Gehäusebechers mit einem Gehäuseboden und einem Gehäusemantel sowie eines Gehäusedeckels, wobei der Gehäuseboden ein Loch aufweist.
b. Einsetzen eines Metallplättchens in den Gehäusebecher, so dass dieses das Loch auf der Innenseite verschließt, wobei zwischen dem Metallplättchen und dem Gehäuseboden eine Isolierschicht angeordnet wird, die das Metallplättchen von dem Gehäuseboden trennt.
c. Einsetzen mindestens einer positiven Elektrode und mindestens einer negativen Elektrode sowie eines Stromleiters, der mit einer der Elektroden verbunden ist, in den Gehäusebecher.
d. Verschweißen des Stromleiters mit dem Metallplättchen.
e. Montage des Deckels zum Schließen des Gehäuses.

Dieses Verfahren dient der Herstellung eines elektrochemischen Energiespeicherelements mit einem Gehäusebecher, dessen Boden ein Loch aufweist, das durch das Metallplättchen verschlossen ist.

Ein weiterer Stromkollektor kann vorgesehen sein, um die nicht mit dem bereits erwähnten Ableiter verbundene Elektrode mit dem Gehäuse oder einem durch das Gehäuse geführten Pol zu verbinden.

Die Isolierschicht dient nicht nur als elektrischer Isolator, sondern dichtet gleichzeitig das Gehäuse ab. Sie ist also bifunktional. Das Metallplättchen kann mitsamt der Isolierschicht in den Gehäusebecher eingesetzt oder vor dem Einsetzen des Metallplättchens in dem Gehäusebecher angeordnet werden.

Bevorzugt erfolgt im Rahmen des Verfahrens eine Wärmebehandlung der Isolierschicht zwecks Verklebung der Isolierschicht mit dem Metallplättchen und/oder der Innenseite des Gehäusebodens. Eine solche Erwärmung kann beispielsweise induktiv erzeugt werden oder lokal mittels eines Lasers oder durch Anpressen eines erhitzen Werkzeugs an die Außenseite des Gehäusebodens in dem Bereich, in dem innenseitig die Isolierschicht anliegt. Vor Schritt c. ist es natürlich auch möglich, die Isolierschicht von beiden Seiten zu erwärmen.

Entsprechend den obigen Ausführungen werden die mindestens eine positive Elektrode und die mindestens eine negative Elektrode bevorzugt in Form eines Wickels oder Stapels in den Gehäusebecher eingesetzt.

Zum Verschweißen des Stromleiters mit dem Metallplättchen werden bevorzugt ein Wickel oder Stapel umfassend die mindestens eine positive Elektrode und die mindestens eine negative Elektrode derart in den Gehäusebecher eingesetzt, dass der Stromleiter, der mit einer der Elektroden verbunden ist, unmittelbar mit dem Metallplättchen in Kontakt steht. Das Verschweißen erfolgt dann bevorzugt von außen, also durch das Metallplättchen hindurch, beispielsweise mittels eines Lasers oder mittels Widerstandsschweißen. Auf ähnliche Weise kann auch ein Kontakt eines weiteren Stromleiters mit dem Gehäuse hergestellt werden, bevorzugt allerdings erst nach der Deckelmontage.

Diese umfasst bevorzugt ein Einsetzen des Gehäusedeckels in die Öffnung des Gehäusebechers oder ein Aufsetzen des Gehäusedeckels auf den Rand des Gehäusebechers und ein anschließendes Verschweißen.

Die Erfindung umfasst ein weiteres Verfahren zur Herstellung des beschriebenen elektrochemischen Energiespeicherelements. Dieses Verfahren umfasst zumindest die folgenden Schritte a. bis e.:
a. Bereitstellen eines Gehäusebechers mit einem Gehäuseboden und einem Gehäusemantel sowie eines Gehäusedeckels, wobei der Gehäusedeckel ein Loch aufweist.
b. Verschluss des Lochs mittels eines Metallplättchens, wobei zwischen dem Metallplättchen und dem Gehäusedeckel eine Isolierschicht angeordnet wird, die das Metallplättchen von dem Gehäusedeckel trennt.
c. Einsetzen mindestens einer positiven Elektrode und mindestens einer negativen Elektrode sowie eines Stromleiters, der mit einer der Elektroden verbunden ist, in den Gehäusebecher.
d. Montage des Deckels zum Schließen des Gehäuses.
e. Verschweißen des Stromleiters mit dem Metallplättchen.

Dieses Verfahren dient der Herstellung eines elektrochemischen Energiespeicherelements mit einem Gehäusedeckel, der ein Loch aufweist, das durch das Metallplättchen verschlossen ist. Im Unterschied zum ersten Verfahren werden hier bevorzugt der Gehäusedeckel, die Isolierschicht und das Metallplättchen vormontiert, bevor das Gehäuse mit dem Gehäusedeckel verschlossen wird. Das Verschweißen des Stromleiters mit dem Metallplättchen kann analog zum ersten beschriebenen Verfahren erfolgen.

### KURZE BESCHREIBUNG DER ZEICHNUNGEN

Weitere Merkmale und Vorteile der Erfindung ergeben sich aus der nachfolgenden Beschreibung von bevorzugten Ausführungsbeispielen in Verbindung mit der Zeichnung. Dargestellte Merkmale können einzeln oder in Kombination mit anderen Merkmalen realisiert sein.

In den Figuren zeigt:

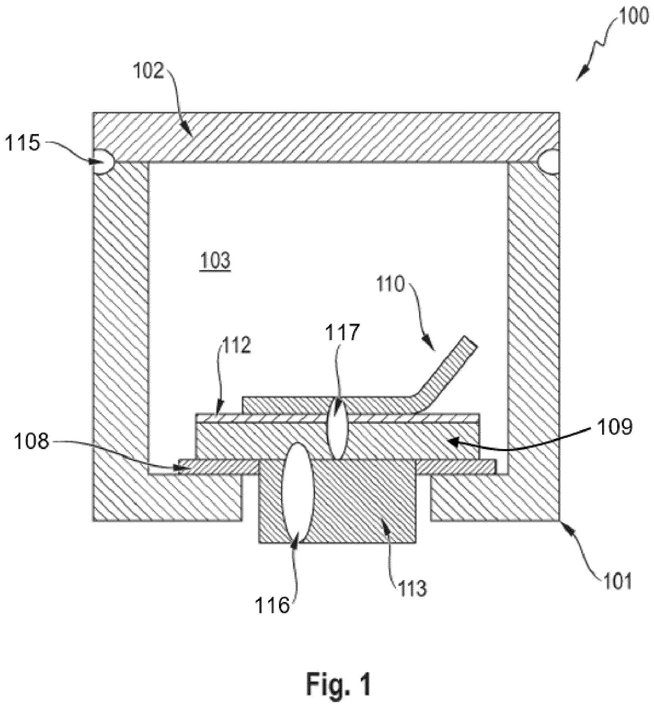

- Fig. 1: schematische Schnittansicht einer möglichen Ausführungsform des Gehäuses eines erfindungsgemäßen Energiespeicherelements.

### BESCHREIBUNG BEVORZUGTER AUSFÜHRUNGSBEISPIELE

Das elektrochemische Energiespeicherelement 100 umfasst ein zylindrisches Gehäuse aus einem Gehäusebecher 101 und einem Gehäusedeckel 102, das einen Innenraum 103 umschließt. Der Gehäusebecher 101 ist ein tiefgezogenes Metallteil und umfasst den Gehäuseboden 104 und den einwandigen Gehäusemantel 105. Der Öffnungsrand 106 des Gehäusebechers 101 definiert eine kreisrunde Öffnung, die von dem Gehäusedeckel 102 verschlossen ist. Bei dem Gehäusedeckel 102 handelt es sich um eine kreisrunde Metallscheibe. Entlang dem Öffnungsrand 106 sind der Gehäusebecher 101 und der Gehäusedeckel 102 über eine umlaufende Schweißnaht 115 miteinander verbunden.

Der Gehäuseboden 104 und der Gehäusedeckel 102 weisen jeweils eine in den Innenraum 103 weisende Innenseite und eine Außenseite auf. Die Innenseite des Gehäusebodens ist mit dem Bezugszeichen 104a versehen, die Innenseite des Gehäusedeckels mit dem Bezugszeichen 102a.

In dem Innenraum 103 sind bei erfindungsgemäßen Energiespeicherelementen stets eine oder mehrere positive und eine oder mehrere negative Elektroden angeordnet, die über einen Elektrolyten miteinander verbunden sind und meist als Wickel oder Stapel vorliegen. Aus Gründen der Übersichtlichkeit wurde vorliegend auf deren Darstellung verzichtet.

Der Gehäuseboden 104 weist ein kreisrundes Loch 107 auf. Auf der Innenseite 104a des Gehäusebodens mit dem Loch 107 ist eine als O-Ring ausgebildete Isolierschicht 108 um das Loch 107 herum angeordnet. Ein Metallplättchen 109, das an der Innenseite 104a, von dieser nur getrennt durch die Isolierschicht 108, anliegt, bildet einen Lochboden und verschließt das Loch 107 auf der Innenseite 104a. Ein Stromleiter 110, der mit einer der nicht dargestellten Elektroden elektrisch verbunden ist, ist an die dem Loch 107 abgewandte Seite 111 des Metallplättchens 109 angebunden (siehe schematisch dargestellte Schweißlinse 117). Die Seite 111 wird durch die korrosionsvorbeugende Aluminiumschicht 112 gebildet.

In dem Loch 107 ist eine Metallscheibe 113 angeordnet, die auf dem Metallplättchen 109 aufsitzt und von dem Rand des Lochs 107a beabstandet ist. Die Metallscheibe 113 ist mit dem Metallplättchen 109 verschweißt (siehe schematisch dargestellte Schweißlinse 116) und dient als Pol zum Abgreifen einer elektrischen Spannung.

Die Metallscheibe 113 ist jedoch nicht zwingend notwendig. Zum Abgreifen oder Anlegen von Strom und Spannung kann auch das Metallplättchen 109 dienen.

## Patentansprüche

1. Elektrochemisches Energiespeicherelement 100, umfassend
a. ein einen Innenraum 103 umschließendes Gehäuse
- mit einem Gehäuseboden 104, der eine in den Innenraum 103 weisende Innenseite 104a und eine Außenseite aufweist,
- einem Gehäusedeckel 102, der eine in den Innenraum 103 weisende Innenseite 102a und eine Außenseite aufweist, und
- einem einwandigen Gehäusemantel 105, und
b. in dem Innenraum 103 angeordnet mindestens eine positive und mindestens eine negative Elektrode, die über einen Elektrolyten miteinander verbunden sind, wobei
c. der Gehäuseboden 104 oder der Gehäusedeckel 102 ein Loch 107 aufweist,
d. auf der Innenseite 104a des Gehäusebodens 104 oder des Gehäusedeckels 102 mit dem Loch 107 eine Isolierschicht 108 um das Loch 107 herum angeordnet ist, und
e. ein Metallplättchen 109, das an dieser Innenseite 104a, nur getrennt durch die Isolierschicht 108, anliegt, einen Lochboden bildet, der das Loch 107 auf der Innenseite 104a verschließt, und
f. ein Stromleiter 110, der mit einer der Elektroden elektrisch verbunden ist, an die dem Loch 107 abgewandte Seite des Metallplättchens 109 angebunden ist.

2. Energiespeicherelement nach Anspruch 1 mit mindestens einem der folgenden zusätzlichen Merkmale:
a. Das Gehäuse umfasst einen Gehäusebecher 101 mit dem Gehäuseboden 104 und dem Gehäusemantel 105.
b. Der Gehäusedeckel 102 ist eine Scheibe.
c. Der Gehäusedeckel 102 verschließt eine endständige Öffnung des Gehäusebechers 101.
d. Der Gehäusedeckel 102 ist in die Öffnung eingeschweißt, gelötet oder geklebt.
e. Der Gehäusedeckel 102 ist auf den Rand der Öffnung eingeschweißt, gelötet oder geklebt.

3. Energiespeicherelement nach Anspruch 1 oder nach Anspruch 2 mit mindestens einem der folgenden zusätzlichen Merkmale:
a. Die mindestens eine positive und die mindestens eine negative Elektrode sind als zylindrischer Elektrode-Separator-Wickel ausgebildet.
b. Die mindestens eine positive und die mindestens eine negative Elektrode sind als Stapel ausgebildet.

4. Energiespeicherelement nach einem der vorhergehenden Ansprüche mit mindestens einem der folgenden zusätzlichen Merkmale:
a. Das Loch 107 liegt im Zentrum des Gehäusebodens 104 oder des Gehäusedeckels 102.
b. Das Loch 107 ist bevorzugt kreisförmig oder polygonal ausgebildet.
c. Das Loch 107 weist einen minimalen Durchmesser im Bereich von 1 mm bis 1 cm und einen maximalen Durchmesser im Bereich von 2 cm bis 3 cm auf.

5. Energiespeicherelement nach einem der vorhergehenden Ansprüche mit mindestens einem der folgenden zusätzlichen Merkmale:
a. Die Isolierschicht 108 ist mit der Innenseite 104a des Gehäusebodens 104 oder des Gehäusedeckels mit dem Loch 107 über einen Klebstoff verbunden
b. Bei der Isolierschicht 108 handelt es sich um eine Schicht aus einem Klebstoff, insbesondere einem Schmelzklebstoff.
c. Die Isolierschicht 108 besteht aus oder basiert auf einem Polyolefin.
d. Die Isolierschicht 108 besteht aus einem Material, das bei einer Temperatur im Bereich von 100 °C bis 180 °C schmilzt.
e. Die Isolierschicht 108 weist eine Dicke im Bereich von 10 µm bis 500 µm auf.
f. Die Isolierschicht 108 ist als O-Ring ausgebildet.

6. Energiespeicherelement nach einem der vorhergehenden Ansprüche mit mindestens einem der folgenden zusätzlichen Merkmale:
a. Das Metallplättchen 109 weist einen minimalen Durchmesser im Bereich von 2 mm bis 1 cm und einen maximalen Durchmesser im Bereich von 2 cm bis 5 cm auf.
b. Das Metallplättchen 109 weist eine Dicke im Bereich von 50 µm bis 500 µm auf.
c. Das Metallplättchen 109 besteht aus einem der folgenden Materialien: Stahl, Edelstahl, Aluminium, Edelstahl beschichtet mit Aluminium, Edelstahl beschichtet mit Aluminium und Nickel, Nickel und Kupfer.

7. Energiespeicherelement nach einem der vorhergehenden Ansprüche mit mindestens einem der folgenden zusätzlichen Merkmale:
a. Bei dem Stromleiter 110 handelt es sich um eine Metallfolie.
b. Die Metallfolie hat eine Dicke im Bereich von 5 µm bis 100 µm.
c. Der Stromleiter 110 besteht aus einem der folgenden Materialien: Kupfer, Nickel und Aluminium
d. Der Stromleiter 110 ist an das Metallplättchen 109 geschweißt.

8. Energiespeicherelement nach einem der vorhergehenden Ansprüche mit dem folgenden zusätzlichen Merkmal:
a. Es umfasst einen weiteren Stromleiter, der eine der Elektroden und das Gehäuse elektrisch miteinander verbindet.

9. Energiespeicherelement nach einem der vorhergehenden Ansprüche mit mindestens einem der folgenden zusätzlichen Merkmale:
a. In dem Loch 107 ist ein metallischer Pol 113 angeordnet, der auf dem Metallplättchen 109 aufsitzt und von dem Rand des Lochs 107 beabstandet ist.
b. Bei dem metallischen Pol 113 handelt es sich um eine Metallscheibe, insbesondere mit einem Durchmesser im Bereich von 1 mm bis 3 cm und/oder einer Dicke im Bereich von 50 µm bis 1000 µm.
c. Der metallische Pol 113 ist mit dem Metallplättchen 109 verschweißt.

10. Verfahren zur Herstellung eines elektrochemischen Energiespeicherelements, insbesondere eines Energiespeicherelements 100 nach einem der vorhergehenden Ansprüche, **gekennzeichnet durch** die folgenden Schritte:
a. Bereitstellen eines Gehäusebechers 101 mit einem Gehäuseboden 104 und einem Gehäusemantel 105 sowie eines Gehäusedeckels 102, wobei der Gehäuseboden 104 ein Loch 107 aufweist.
b. Einsetzen eines Metallplättchens 109 in den Gehäusebecher 101, so dass dieses das Loch 107 auf der Innenseite 104a verschließt, wobei zwischen dem Metallplättchen 109 und dem Gehäuseboden 104 eine Isolierschicht 108 angeordnet wird, die das Metallplättchen 109 von dem Gehäuseboden 104 trennt.
c. Einsetzen mindestens einer positiven Elektrode und mindestens einer negativen Elektrode sowie eines Stromleiters 110, der mit einer der Elektroden verbunden ist, in den Gehäusebecher 101.
d. Verschweißen des Stromleiters 110 mit dem Metallplättchen 109.
e. Montage des Deckels 102 zum Schließen des Gehäuses.

11. Verfahren zur Herstellung eines elektrochemischen Energiespeicherelements, insbesondere eines Energiespeicherelements nach einem der Ansprüche 1 bis 9, **gekennzeichnet durch** die folgenden Schritte:
a. Bereitstellen eines Gehäusebechers mit einem Gehäuseboden und einem Gehäusemantel sowie eines Gehäusedeckels, wobei der Gehäusedeckel ein Loch aufweist.
b. Verschluss des Lochs mittels eines Metallplättchens, wobei zwischen dem Metallplättchen und dem Gehäusedeckel eine Isolierschicht angeordnet wird, die das Metallplättchen von dem Gehäusedeckel trennt.
c. Einsetzen mindestens einer positiven Elektrode und mindestens einer negativen Elektrode sowie eines Stromleiters, der mit einer der Elektroden verbunden ist, in den Gehäusebecher.
d. Montage des Deckels zum Schließen des Gehäuses.
e. Verschweißen des Stromleiters mit dem Metallplättchen.
